# EUROPÄISCHE PATENTSCHRIFT

(11) **EP 1 685 095 B1**
(45) Veröffentlichungstag und Bekanntmachung des Hinweises auf die Patenterteilung: **11.08.2010**
(21) Anmeldenummer: 04790857.9
(22) Anmeldetag: 26.10.2004
(51) Int. Cl.: C07C 275/70, C07C 381/12, C07D 213/20, C07D 233/58, C07D 277/62, C07D 263/56, C07F 9/28

(54) **VERFAHREN ZUR HERSTELLUNG VON ORGANISCHEN SALZEN MIT BIS(PERFLUORALKYL)PHOSPHINAT-ANIONEN**
METHOD FOR THE PRODUCTION OF ORGANIC SALTS CONTAINING BIS(PERFLUOROALKYL)PHOSPHINATE ANIONS
PROCEDE DE PREPARATION DE SELS ORGANIQUES CONTENANT DES ANIONS DE BIS(PERFLUORALKYL)PHOSPHINATE

(30) Priorität: 17.11.2003 DE 10353758
(43) Veröffentlichungstag der Anmeldung: 02.08.2006
(73) Patentinhaber: Merck Patent GmbH, 64293 Darmstadt (DE)
(72) Erfinder: IGNATYEV, Nikolai (Mykola), 47058 Duisburg (DE); WELZ-BIERMANN, Urs, 64646 Heppenheim (DE); WILLNER, Helge, 45481 Mühlheim/Ruhr (DE); KUCHERYNA, Andriy, 42117 Wuppertal (DE)
(86) Internationale Anmeldenummer: PCT/EP2004/012074
(87) Internationale Veröffentlichungsnummer: WO 2005/049555

(56) Entgegenhaltungen:
- WO-A1-03/087110
- PAVLENKO, N.V. ET AL: "Esters of bis(perfluoroalkyl)phosphinic acids, (Rf)2P(O)OR, are of interest as biologically active compounds, alkylating agents and surfactants" J. GEN. CHEM. USSR, Bd. 59, 1989, Seiten 474-476, XP002104254

## Beschreibung

Die vorliegende Erfindung betrifft ein Verfahren zur Herstellung von organischen Salzen enthaltend Bis(perfluoralkyl)phosphinat-Anionen, sowie die mit diesem Verfahren hergestellten Salze.

Quaternäre Ammonium- und Phosphoniumsalze werden typischerweise durch Alkylierung von Aminen oder Phosphinen hergestellt. Hierzu werden verschiedene Alkylierungsmittel wie zum Beispiel Alkylhalogenide, Alkylsulfate, Alkyltriflate u.a. verwendet. Dieses Verfahren kann auch auf die Synthese von Salzen mit heterocyclischen Kationen angewendet werden. Nachteilig bei diesem Verfahren sind die hohen Kosten des Alkylierungsmittels, die Giftigkeit dieser Alkylierungsmittel (Dimethylsulfat beispielsweise ist sehr giftig). Ferner sind über dieses Verfahren nur Salze mit bestimmten Anionen erhältlich. Um Salze mit anderen Anionen zu erhalten, ist als zusätzlicher Schritt ein Ionenaustausch notwendig, indem das Salz mit einer Broensted-Säure oder einem Metallsalz umgesetzt wird. Hierdurch wird die Synthese organischer Salze mit bestimmten Anionen sehr teuer.

In den letzten Jahren ist das Interesse an organischen Salzen, die einen sehr niedrigen Schmelzpunkt aufweisen, gewachsen. Diese Verbindungen finden aufgrund ihres niedrigen Schmelzpunktes vermehrt als ionische Flüssigkeiten Anwendung, wie einige Review-Artikel der letzten Jahre belegen (P. Wasserscheid, W. Keim, "Ionische Flüssigkeiten - neue Lösungen für die Übergangsmetallkatalyse", Angew. Chem. 112 (2000) S. 3926-3945; R. Sheldon, "Catalytic reactions in ionic liquids", Chem. Commun. 2001, S. 2399-2407; M. J. Earle, K. R. Sheldon, "Ionic liquids. Green solvent for the future", Pure Appl. Chem. 72, Nr. 7 (1999), S. 1391-1398; T. Welton, "Room temperature ionic liquids of alkylimidazolium cations and fluoroanions", J. of Fluorine Chem. 105 (2000) S. 221-227). Der Ausdruck ionische Flüssigkeit impliziert dabei, dass die Verbindung bei Raumtemperatur oder bei relativ niedrigen Temperaturen flüssig ist. Darüber hinaus enthält sie ein organisches Kation, wie zum Beispiel Tetraalkylammonium-, Tetraalkylphosphonium-, N-Alkylpyridinium-, 1,3-Dialkylimidazolium- und Trialkylsulfonium-Kationen, und ein meistens anorganisches Anion, wie beispielsweise BF₄⁻, PF₆⁻, SCF₆⁻, NO₃⁻, CF₃SO₃⁻, (CF₃SO₂)₂N⁻, ArSO₃⁻, CF₃CO₂⁻, CH₃CO₂⁻, Al₂Cl₇⁻.

Die Eigenschaften der ionischen Flüssigkeiten, wie zum Beispiel der Schmelzpunkt, die thermische und die elektrochemische Stabilität und die Viskosität, werden stark von der Natur des Anions und der des Kations beeinflußt. Die Polarität und die Hydrophilie bzw. Lipophilie können durch die Wahl eines geeigneten Kation/Anion-Paares eingestellt werden. Jedes neue Anion und jedes neue Kation eröffnet weitere Möglichkeiten für das Tuning der Eigenschaften von ionischen Flüssigkeiten.

Für die praktische Anwendung der ionischen Flüssigkeiten ist die Wirtschaftlichkeit, d.h. der Preis, ausschlaggebend. Und hiernach zu urteilen, d.h. aufgrund ihrer sehr hohen Herstellungskosten, sind die derzeit bekannten ionischen Flüssigkeiten nicht vergleichbar mit normalen organischen Lösungsmitteln. Daher ist die Entwicklung neuer Verfahren, die die Herstellungskosten ionischer Flüssigkeiten reduzieren, sehr wichtig.

Vor kurzem wurde ein Verfahren zu Herstellung von
Bis(perfluoralkyl)phosphinsäure (DE 102 169 97) entwickelt. Die Neutralisierung dieser Säuren mit organischen Basen, zum Beispiel Tetrabutylammoniumhydroxid, führt zur Bildung der korrespondierenden Salze. Bis(perfluoralkyl)phosphinsäure kann ferner für die Umwandlung von organischen Chloriden in organische Salze mit einem
Bis(perfluoralkyl)phosphinat-Anion unter Freisetzung von HCl verwendet werden. Aber auch hierbei ist vorab die Synthese der korrespondierenden Chloride (oder Bromide) über den oben beschriebenen Alkylierungsprozess oder die Verwendung teurer Alkylammonium- oder Alkylphosphoniumhydroxide notwendig.

Im Stand der Technik ist die Reaktion von Tris(heptafluorpropyl)-phosphinoxid mit Methanol bekannt, die zu der Bildung von Dimethylether und Bis(heptafluorpropyl)-phosphinsäure führt (N. V. Pavlenko, et al., J, Gen. Chem. USSR (engl. Transl.), 59, Nr. 3 (1989) S. 474-476). Die Bildung dieses Produktes wurde mit der intermediären Bildung des Methylesters der Bis(heptafluorpropyl)-phosphinsäure erklärt, die dann das Edukt Methanol zum Dimethylether alkyliert.

Aufgabe der vorliegenden Erfindung ist es, ein technisches und wirtschaftlich vorteilhaftes Verfahren zur Herstellung von Salzen mit Bis(perfluoralkyl)-phosphinat-Anionen anzugeben, das die Nachteile des Standes der Technik nicht aufweist. Insbesondere ist es Aufgabe der vorliegenden Erfindung ein Verfahren bereit zu stellen, das gute Ausbeuten aufweist sowie einfacher und kostengünstiger ist als die aus dem Stand der Technik bekannten Verfahren.

Diese Aufgabe wird erfindungsgemäß durch die kennzeichnenden Merkmale des Hauptanspruchs und der nebengeordneten Ansprüche gelöst.

Die Erfindung zeichnet sich dadurch aus, dass Tris(perfluoralkyl)-phosphinoxid durch einfache Umsetzung mit einem Alkohol und einer organischen Base, die stärker basisch als der Alkohol ist, das entsprechende Salz mit einem Bis(perfluoralkyl)-phosphinat-Anion in guten Ausbeuten bildet.

Das Bis(perfluoralkyl)phosphinat-Anion kann durch die Formel [(R^{F})₂P(O)O]⁻ dargestellt werden, wobei R^{F} jeweils unabhängig voneinander eine Perfluoralkylgruppe bedeutet, wie nachfolgend beschrieben.

Tris(perfluoralkyl)phosphinoxid kann durch die Formel (R^{F})₃P=O, beschrieben werden, wobei R^{F} jeweils unabhängig voneinander eine Perfluoralkylgruppe bedeutet, wie nachfolgend beschrieben.

Durch die Gegenwart einer stärkeren Base als des Alkohols wird die unerwünschte Bildung des Dialkylethers unterdrückt und es werden die korrespondierenden organischen Salze mit dem Bis(perfluoralkyl)-phosphinat-Anion gebildet.

Die Monohydroperfluoralkane, die bei dem erfindungsgemäßen Verfahren als Nebenprodukt entstehen, sind ebenfalls wertvolle Substanzen. Sie können isoliert und für verschiedene Anwendungen, wie zum Beispiel wie in der DE 102 16 995 angegeben, benutzt werden.

Bei dem erfindungsgemäßen Verfahren entstehen daher praktisch keine überflüssigen Substanzen, die entsorgt werden müßten. Ferner ist das erfindungsgemäße Verfahren aufgrund der verwendeten Edukte und des nur einen Reaktionsschrittes kostengünstig durchzuführen.

Vorteilhafterweise können durch das erfindungsgemäße Verfahren Verbindungen mit einem Bis(perfluoralkyl)-phosphinat-Anion in nur einem Verfahrensschritt hergestellt werden. Auch sind als Edukte für die neu eingeführte Alkylgruppe des Kations keine teueren Alkylierungsmittel notwendig, sondern billige Alkohole geeignet.

Das erfindungsgemäße Verfahren zur Herstellung von organischen Salzen mit Bis(perfluoralkyl)phosphinat-Anionen umfaßt somit zumindest die Umsetzung von einem Tris(perfluoralkyl)phosphinoxid mit einem Alkohol und einer organischen Base, die stärker basisch ist als der Alkohol.

In einer bevorzugten Variante des erfindungsgemäßen Verfahren wird als organische Base eine Verbindung der allgemeinen Formel (1),

R₃X (1)

oder der allgemeinen Formel (2),

R₂Y (2)

eingesetzt wird. Dabei bedeuten:
X 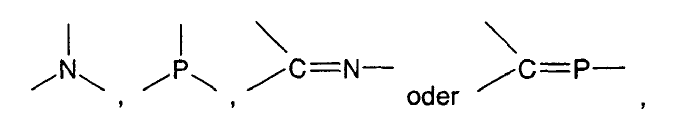
- Y: -O-, -S-, -Se-, -C(=O)-, -C(=S)- oder -C(=Se)-,
- R: -H für Y ≠O und wobei im Fall der Formel (2) nicht alle R
gleichzeitig H sein dürfen,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen oder
gesättigtes, teilweise oder vollständig ungesättigtes Cycloalkyl mit 3-7 C-Atomen, insbesondere Phenyl,
das mit Alkylgruppen mit 1-6 C-Atomen substituiert sein kann,
wobei die Substituenten R jeweils gleich oder verschieden sind,
wobei die Substituenten R paarweise durch Einfach- oder Doppelbindung miteinander verbunden sein können,
wobei ein oder mehrere, jedoch nicht alle Substituenten R teilweise oder vollständig mit Halogenen, insbesondere -F und/oder -CI, oder teilweise mit -CN oder -NO₂, substituiert sein können
und wobei ein oder zwei nicht benachbarte Kohlenstoffatome des Substituenten R durch Atome und/oder Atomgruppierungen ausgewählt aus der Gruppe -O-, -C(O)-, -C(O)O-, -C(O)NH-, -C(O)NR'-, -S-, -S(O)-, - S(O)NH-, -S(O)NR'-, -S(O)O-, -S(O)₂-, -S(O)₂O-, -S(O)₂NH-, -S(O)₂NR'-, - N=, -N=N-, -NH-, -NR'-, -PH-, -PR'-, -P(O)R'-, -P(O)R'-O-, -O-P(O)R'-O- und -PR'₂=N- mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, ersetzt sein können.

Als Substituenten R der erfindungsgemäß verwendeten organischen Basen kommen somit neben Wasserstoff in Frage: C₁- bis C₂₀-, insbesondere C₁-bis C₁₂-Alkylgruppen, und gesättigte oder ungesättigte, d.h. auch aromatische, C₃- bis C₇-Cycloalkylgruppen, die mit C₁- bis C₆-Alkylgruppen substituiert sein können, insbesondere Phenyl. Für den Fall, dass es sich um eine Base der Formel (2) handelt, dürfen jedoch nicht alle R gleichzeitig Wasserstoff sein, d.h. bei der Base darf es sich nicht um H₂O, H₂S oder H₂Se handeln.

Unter einer Alklygruppe mit 1 bis 12 C-Atomen versteht man beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, Octyl, Nonyl, Decyl, Undecyl oder Dodecyl. Die Alkylgruppen können auch teilweise oder vollständig mit Halogenen, insbesondere -F und/oder -Cl substituiert sein. Fluorierte Alkylgruppen sind Difluormethyl, Trifluormethyl, Pentafluorethyl, Pentafluorpropyl, Heptafluorpropyl, Heptafluorbutyl oder Nonafluorbutyl. Perfluoralkylgruppe bedeutet, dass alle H-Atome der Alkylgruppe durch F-Atome ersetzt sind.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclopenta-1,3-dienyl, Cyclohexenyl, Cyclohexa-1,3-dienyl, Cyclohexa-1,4-dienyl, Phenyl, Cycloheptenyl, Cyclohepta-1,3-dienyl, Cyclohepta-1,4-dienyl oder Cyclohepta-1,5-dienyl, welche mit C₁- bis C₆-Alkylgruppen substituiert sein können, wobei wiederum die Cycloalkylgruppe oder die mit C₁- bis C₆-Alkylgruppen substituierte Cycloalkylgruppe auch mit Halogenatomen wie F, Cl, Br oder I, insbesondere F oder Cl, CN oder NO₂ substituiert sein kann.

Die drei bzw. zwei Substituenten R der organischen Base können dabei gleich oder verschieden sein. Die Substituenten R können auch paarweise derart verbunden sein, dass mono-, bi- oder polycyclische Basen entstehen, beispielsweise bevorzugt die Heterocyclen Pyridin, Imidazol, Pyrazol, Triazol, Pyridazin, Pyrimidin, Pyrazin, Thiazol, Oxazol,
Benzoxazol, Benzothiazol, Pyrollidin, Piperidin, Piperazin, Morpholin, Indol, Indolin, Chinolin, Isochinolin oder Anilin, die gegebenenfalls durch geradkettiges oder verzweigtes Alkyl mit 1-20 C-Atomen,
geradkettiges oder verzweigtes Alkenyl mit 2-20 C-Atomen und
einer oder mehreren Doppelbindungen,
geradkettiges oder verzweigtes Alkinyl mit 2-20 C-Atomen und
einer oder mehreren Dreifachbindungen oder
gesättigtes, teilweise oder vollständig ungesättigtes Cycloalkyl
mit 3-7 C-Atomen, insbesondere Phenyl,
das mit Alkylgruppen mit 1-6 C-Atomen substituiert sein kann,
substituiert sein können. Bevorzugt sind die angegebenen Heterocyclen unsubstituiert oder mit geradkettigen oder verzweigten Alkylgruppen mit 1-20 C-Atomen, insbesondere 1-12 C-Atomen, substituiert.

Die Substituenten R können teilweise oder vollständig mit Halogenatomen, insbesondere mit F und/oder Cl, oder teilweise mit CN oder NO₂ substituiert sein, wobei jedoch nicht alle Substituenten R vollständig halogeniert vorliegen dürfen. Ferner können die Substituenten R ein oder zwei, einander nicht benachbarte Heteroatome oder Atomgruppierungen, ausgewählt aus der Gruppe O, C(O), C(O)O, C(O)NH, C(O)NR', S, S(O), S(O)NH, S(O)NR', S(O)O, SO₂, SO₂O, SO₂NH, SO₂NR', N, N=N, NH, NR', PH, PR', P(O)R', P(O)R'O, OP(O)R'O und PR'₂=N enthalten, wobei R' ein nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus, sein kann.

In R' ist C₃- bis C₇-Cycloalkyl beispielweise Cyclopropyl, Cyclobutyl, Cyclopentyl, Cyclohexyl oder Cycloheptyl.

In R' bedeutet substituiertes Phenyl, durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, C(O)NR"₂, SO₂OR", SO₂X', SO₂NR"₂ oder NHC(O)R" substituiertes Phenyl, wobei X' F, Cl oder Br und R" ein nicht, teilweise oder perfluoriertes C₁- bis C₆-Alkyl oder C₃- bis C₇-Cycloalkyl wie für R' definiert bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Aminophenyl, o-, m- oder p-(N,N-Dimethylamino)phenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-lodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R' wird als Heterocyclus ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch C₁- bis C₆-Alkyl, C₁-bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, C(O)NR"₂, SO₂OR", SO₂X', SO₂NR"₂ oder NHC(O)R" substituiert sein kann, wobei X' und R" eine zuvor angegebene Bedeutung haben.

Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Ohne Einschränkung der Allgemeinheit sind Beispiele für Substituenten R der erfindungsgemäß verwendeten organischen Basen:
-CH₃, -C₂H₅, -C₃H₇, -CH(CH₃)₂, -C₄H₉, -C(CH₃)₃, -C₅H₁₁, -C₆H₁₃, -C₇H₁₅, -C₈H₁₇, -C₉H₁₉, -C₁₀H₂₁, -C₁₂H₂₅, -C₂₀H₄₁, -OCH₃, -OCH(CH₃)₂, -CH₂OCH₃, -C₂H₄OCH(CH₃)₂, -SCH₃, -SCH(CH₃)₂, -C₂H₄SC₂H₅, -C₂H₄SCH(CH₃)₂, -S(O)CH₃, -CH₂SO₂CH₃, -OSO₂CH₃, -CH₂N(H)C₂H₅, -C2H₄N(H)C₂H₅, -CH₂N(CH₃)CH₃, -C₂H₄N(CH₃)CH₃, -N(CH₃)₂, -N(CH₃)C₃H₅, -N(CH₃)CF₃, -O-C₄H₈-O-C₄H₉, -S-C₂H₄-N(C₄H₉)₂, -CF₃, -C₂F₅, -C₃F₇, -C₄F₉, -C(CF₃)₃, -CF₂SO₂CF₃, -C₂F₄N(C₂F₅)C₂F₅, -CFH₂, -CHF₂, -CH₂CF₃, -C₂F₂H₃, -C₃FH₆, -CH₂C₃F₇, -C(CFH₂)₃, -CHO, -CH₂C(O)CH₃, -CH₂C(O)C₂H₅, -CH₂C(O)OCH₃, CH₂C(O)OC₂H₅, -C(O)CH₃, -C(O)OCH₃, -CH=CH₂, -CH₂CH=CH₂, -C(CH₃)=CH₂, -CH=CHCH₃, -CH₂CH=CHCH₃, -O-CH=CH₂, -O-CH₂CH=CH₂, -C≡CH, -CH₂C≡CH, -C≡CCH₃, -CH₂C≡CCH₃,

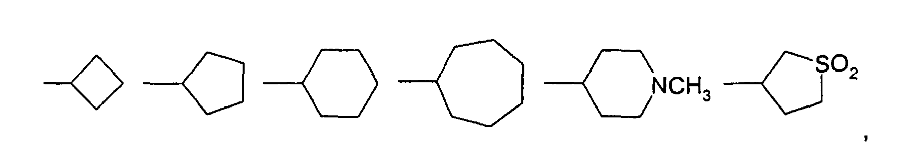

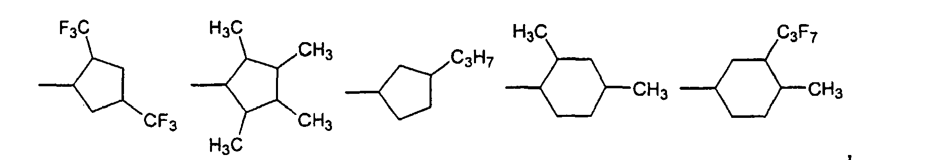

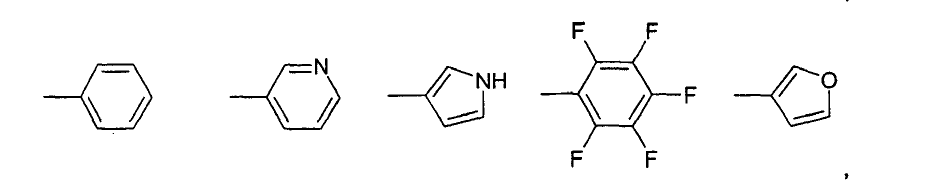

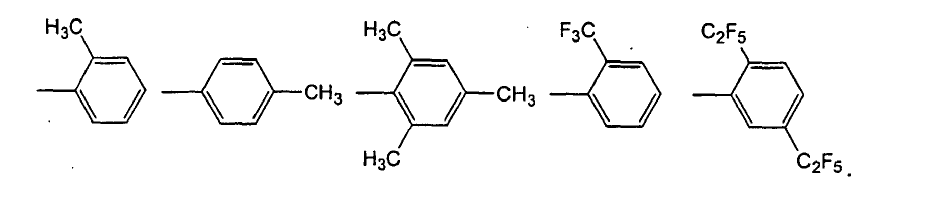

Die Auswahl einer geeigneten Base für das erfindungsgemäße Verfahren bereitet dem Fachmann keinerlei Schwierigkeiten. Insbesondere bevorzugt sind erfindungsgemäß Basen, die ausgewählt aus der Gruppe (C₂H₅)₃N, (C₂H₅)₂NH, (C₂H₅)₃P, (C₂H₅O)₃P, (C₄H₉)₃P, CH₃-S-CH₃, (CH₃)₂N-C(O)-N(CH₃)₂, C₆H₅-Se-C₆H₅, Guanidin, Pyridin, Imidazol, N-Methyl-Imidazol, Benzoxazol, Benzothiazol, Pyrollidin, Piperidin, Piperazin, Anilin, N,N-Dimethylanilin, Benzylamin, N-Ethylbenzylamin oder Diphenylsulfid sind.

Der geeignete Alkohol wird so ausgewählt, dass nach der Alkylierung der verwendeten Base das gewünschte Kation entsteht. Die entsprechende Auswahl bereitet dem Fachmann keinerlei Schwierigkeiten. Als Alkohol, formelmäßig als R^{OH}-OH zu beschreiben, wird ohne Einschränkung der Allgemeinheit für das erfindungsgemäße Verfahren bevorzugt ein aliphatischer Alkohol verwendet, d.h. R^{OH} bedeutet in diesem Fall eine aliphatische Gruppe. Besonders bevorzugt sind Verfahrensvarianten, bei denen ein Alkohol eingesetzt wird, der aus der Gruppe Methanol, Ethanol, Isopropanol, n-Propanol, Allylalkohol, Butanol, Hexanol oder Benzylalkohol ausgewählt ist, aber auch fluorierte aliphatische Alkohole, wie 4,5,5-Trifluorpent-4-en-1-ol oder 3,3,4,4,5,5,5-Heptafluorpentan-1-ol.

Die Herstellung der erfindungsgemäß verwendeten Tris(perfluoralkyl)-phosphinoxide kann nach üblichen, dem Fachmann bekannten Methoden erfolgen. Vorzugsweise werden diese Verbindungen durch Umsetzung mit Hexamethyldisiloxan (V. Ya. Sememii et al., J. Gen. Chem. USSR (Engl. Trans.) 55, Nr. 12 (1985), 2415-2417) hergestellt.

Erfindungsgemäß können auch Mischungen aus zwei oder mehr Tris(perfluoralkyl)phosphinoxiden verwendet werden. Vorzugsweise wird in dem erfindungsgemäßen Verfahren jeweils nur ein Tris(perfluoralkyl)phosphinoxid umgesetzt.

Die erfindungsgemäß verwendeten Tris(perfluoralkyl)phosphinoxide oder deren korrespondierende Derivate besitzen drei Perfluoralkylgruppen, zuvor als R^{F} abgekürzt, die gleich oder verschieden sind. Bevorzugt werden Tris(perfluoralkyl)phosphinoxide mit jeweils gleichen Perfluoralkylgruppen verwendet.

In einer bevorzugten Ausführungsform des erfindungsgemäßen Verfahrens wird ein Tris(perfluoralkyl)phosphinoxid eingesetzt, bei dem die Perfluoralkylgruppen 1 bis 20 C-Atome enthalten und geradkettig oder verzweigt sind. Besonders bevorzugt sind Edukte, deren Perfluoralkylgruppen 1 bis 12 C-Atome besitzen.

Ohne Einschränkung der Allgemeinheit wird als
Tris(perfluoralkyl)phosphinoxid eine Verbindung ausgewählt aus der Gruppe (CF₃)₃P(O), (C₂F₅)₃P(O), (C₃F₇)₃P(O) und (C₄F₉)₃P(O) verwendet.

Als Reaktionsmedium eignen sich für das erfindungsgemäße Verfahren vorzugsweise ein übliches, dem Fachmann bekanntes polares oder unpolares Lösungsmittel. Alternativ kann das erfindungsgemäße Verfahren auch ohne Lösungsmittel durchgeführt werden. Ohne Einschränkung der Allgemeinheit wird als polares Lösungsmittel besonders bevorzugt Dichlormethan, 1,2-Dimethoxyethan, Benzol oder eine Mischung davon verwendet.

Die Temperatur, bei der die Umsetzung erfindungsgemäß bevorzugt durchgeführt wird, liegt zwischen -20° C und 200° C. Besonders bevorzugt wird die Umsetzung bei einer Temperatur von 0° C bis 100° C durchgeführt. Ganz besonders bevorzugt ist als Reaktionstemperatur die Raumtemperatur.

In einer bevorzugten Variante des erfindungsgemäßen Verfahrens wird ohne Überschuss oder mit bis zu fünffachem Überschuss von einem der Reaktanden bezogen auf die molare Menge durchgeführt. Besonders bevorzugt wird die Umsetzung mit annähernd äquimolaren Mengen der Edukte durchgeführt.

Die mit dem erfindungsgemäßen Verfahren hergestellten Verbindungen besitzen salzartigen Charakter, relativ niedrige Schmelzpunkte (meist unter 100°C) und können als ionische Flüssigkeiten verwendet werden.

Die mit dem erfindungsgemäßen Verfahren hergestellten Salze können als Lösungsmittel für viele synthetische oder katalytische Reaktionen eingesetzt werden, z.B. Friedel-Crafts-Acylierung und -Alkylierung, Diels-Alder-Cycloadditionen, Hydrogenierungs- und Oxidationsreaktionen, Heck-Reaktionen, Suzuki-Kupplungen, Hydroformilierungen.

Auch der Einsatz der mit dem erfindungsgemäßen Verfahren hergestellten Verbindungen als nichtwässriger Elektrolyt gegebenenfalls in Kombination mit anderen, dem Fachmann bekannten Elektrolyten oder als Leitsalz in elektrochemischen Zellen ist möglich.

Daneben können die mit dem erfindungsgemäßen Verfahren hergestellten Salze als nichtwässrige polare Substanzen in geeigneten Reaktionen als Phasentransferkatalysator, als Surfactant (surface active agent = grenzflächenaktive Stoffe), als Tensid, als Weichungsmittel (plasticizer) oder als Medium zur Heterogenisierung von homogenen Katalysatoren verwendet werden.

Ein allgemeines Schema fasst das erfindungsgemäße Verfahren in zusammen: 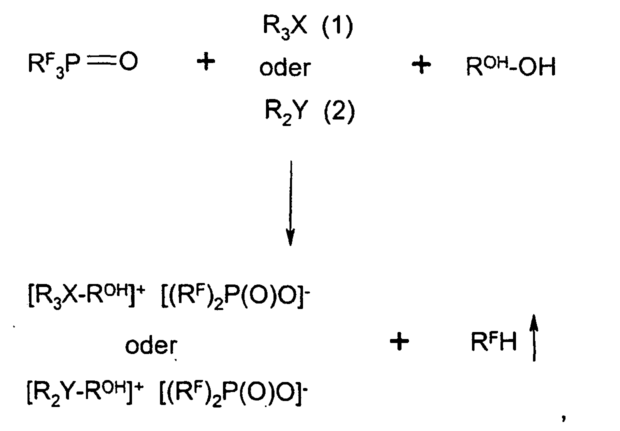 wobei R^{F}, R, X, Y und R^{OH} eine in der Beschreibung angegebene Bedeutung haben. Der bei dem Monohydroperfluoralkan R^{F}H angegebene Pfeil bedeutet, dass die Verbindung flüchtig ist.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die NMR-Spektren wurden an Lösungen in deuterierten Lösungsmitteln bei 20°C an einem Bruker Avance 300 Spektrometer mit einem 5 mm Breitbandkopf ¹H/BB mit Deuterium Lock gemessen. Die Messfrequenzen der verschiedenen Kerne sind: ¹H: 300,13 MHz, ¹¹B: 96,92 MHz, ¹⁹F: 282,41 MHz und ³¹P: 121,49 MHz. Die Methode der Referenzierung wird bei jedem Spektrum bzw. bei jedem Datensatz separat angegeben.

Beispiele:
Beispiel 1: N-Ethylpyridinium-Bis(pentafluorethyl)phosphinat 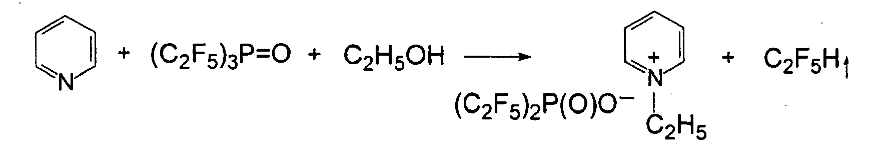 15.69 g (38.8 mmol) Tris(pentafluorethyl)phosphinoxid, (C₂F₅)₃P=O, werden in einem 50 ml Kolben, der mit einem auf -65 bis -70° C abgekühlten Rückflusskühler ausgestattet ist, mit 20 cm³ Dichlormethan und 3.09 g (39.1 mmol) Pyridin vermischt. Bei Raumtemperatur werden 1.85 g (40.2 mmol) Ethanol unter Rühren der Reaktionsmischung mit einem Magnetrührer innerhalb von 15 Minuten zugegeben. Der Rückflußkühler wird auf Raumtemperatur erwärmt und das Dichlormethan wird abdestilliert. Der Rückstand wird im Vakuum von 1.4 Pa bei 60° C getrocknet. 14.56 g eines tiefroten, sehr viskosen Materials werden erhalten. Die Ausbeute an N-Ethylpyridinium-Bis(pentafluorethyl)phosphinat ist 91.7 %.
   ¹⁹F NMR (Referenz: CCl₃F - interner Standard; Lösungsmittel: CD₃CN) : -80.13 m (2CF₃); -124.81 dm (2CF₂); ²JP,F = 67 Hz.
   ¹H NMR (Referenz: TMS ; Lösungsmittel: CD₃CN) : 1.59 t (CH₃); 4.59 q (CH₂); 8.03 m (2CH); 8.50 tt (CH); 8.78 m (2CH); ³J_{H,H} = 7.3 Hz; ³J_{H,H} = 7.8 Hz; ⁴J_{H,H} = 1.2 Hz.
   ³¹P NMR (Referenz: 85 % H₃PO₄; Lösungsmittel: CD₃CN) : -2.19 quin. ; ²J_{P,F} = 67 Hz.
Beispiel 2: Ethyldimethylsulphonium-Bis(pentafluorethyl)phosphinat 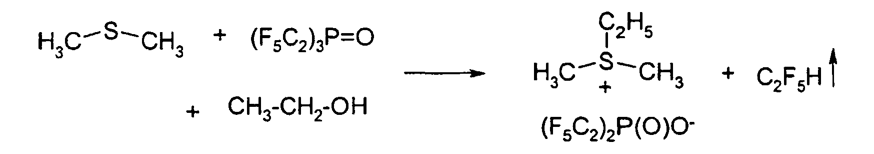 4.92 g (12.2 mmol) Tris(pentafluorethyl)phosphinoxid, (C₂F₅)₃P=O, werden in einem 50 ml Kolben, der mit einem Rückflusskühler ausgestattet ist, mit 20 cm³ 1,2-Dimethoxyethan und 0.775 g (12.5 mmol) Dimethylsulfid vermischt. Bei Raumtemperatur werden 0.560 g (12.2 mmol) Ethanol unter Rühren der Reaktionsmischung mit einem Magnetrührer innerhalb von 1 Minute zugegeben. Die Reaktionsmischung wird 5 Stunden unter Rückfluss gekocht und das 1,2-Dimethoxyethan wird abdestilliert. Der Rückstand wird im Vakuum von 1.4 Pa bei 40° C getrocknet. 4.18 g eines festen Materials werden erhalten. Die Ausbeute an Ethyldimethylsulphonium-Bis(pentafluorethyl)phosphinat ist 87.4 %.
   ¹⁹F NMR (Referenz: CCl₃F - interner Standard; Lösungsmittel: CD₃CN) : -80.19 m (2CF₃); -124.96 dm (2CF₂); ²J_{P,F} = 69 Hz.
   ¹H NMR (Referenz: TMS ; Lösungsmittel: CD₃CN) : 1.37 t (CH₃); 2.81 s (2CH₃); 3.28 q (CH₂); ³J_{H,H} = 7.4 Hz.
   ³¹P NMR (Referenz: 85 % H₃PO₄; Lösungsmittel: CD₃CN) : -1.86 quin. ; ²J_{P,F} = 69 Hz.
Beispiel 3: N-Methylbenzoxazolium-Bis(pentafluorethyl)phosphinat 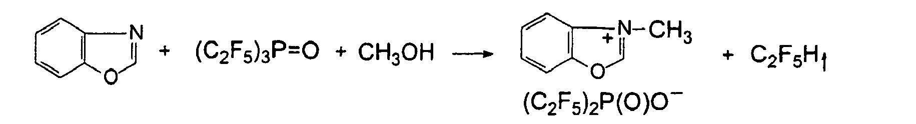 9.40 g (23.3 mmol) Tris(pentafluorethyl)phosphinoxid, (C₂F₅)₃P=O, werden in einem 50 ml Kolben, der mit einem Rückflusskühler ausgestattet ist, mit 20 cm³ trockenem 1,2-Dimethoxyethan und 2.77 g (23.3 mmol) Benzoxazol vermischt. Bei Raumtemperatur werden 0.745 g (23.3 mmol) Methanol unter Rühren der Reaktionsmischung mit einem Magnetrührer innerhalb von 5 Minuten zugegeben. Die Reaktionsmischung wird 1 Stunde gerührt und das 1,2-Dimethoxyethan wird abdestilliert. Der Rückstand wird im Vakuum von 1.4 Pa bei 40° C getrocknet, 9.44 g eines festen Materials werden erhalten (Schmelzpunkt 78-79° C). Die Ausbeute an N-Methylbenzoxazolium-Bis(pentafluorethyl)phosphinat ist 93.1 %.
   ¹⁹F NMR (Referenz: CCl₃F - interner Standard; Lösungsmittel: CD₃CN) _{:} 80.16 m (2CF₃); -124.93 dm (2CF₂); ²J_{P,F} = 71 Hz.
   ¹H NMR (Referenz: TMS ; Lösungsmittel: CD₃CN) : 4.20 d (CH₃); 7.85 m (2CH) ; 8.01 m (2CH) ; 10.05 br. s (CH) ; ⁴J_{H,H} = 1.0 Hz.
   ³¹P NMR (Referenz: 85 % H₃PO₄, Lösungsmittel: CD₃CN) : -1.77 quin. ; ²J_{P,F} = 71 Hz.
Beispiel 4: Triethyl-i-propylammonium-Bis(pentafluorethyl)phosphinat 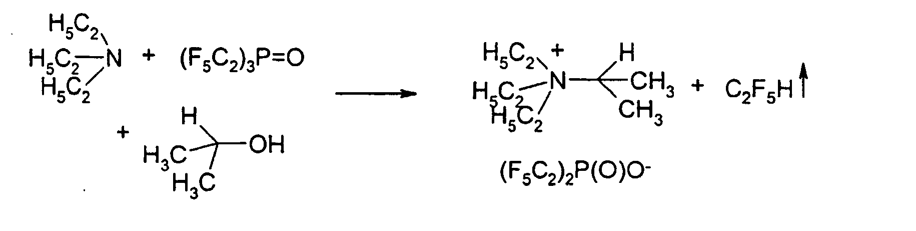 9.30 g (23.0 mmol) Tris(pentafluorethyl)phosphinoxid, (C₂F₅)₃P=O, werden in einem 50 ml Kolben, der mit einem Rückflusskühler und einem Magnetrührer ausgestattet ist, mit 8.34 g (82.4 mmol) Triethylamin vermischt. Zu dieser Reaktionsmischung werden bei 0° C (Eisbad-Kühlung) 1.41 g (23.5 mmol) i-Propanol unter Rühren zugegeben. Die Reaktionsmischung wird 5 Stunden bei 0° C und 36 Stunden bei Raumtemperatur gerührt. Alle flüchtigen Produkte werden im Hochvakuum von 1.4 Pa bei 50° C entfernt. 9.25 g eines festen Materials, bestehend aus 37 % Triethylammonium-Bis(pentafluorethyl)phosphinat und 63 % Triethyli-propylammonium-Bis(pentafluorethyl)phosphinat werden erhalten.
   Zur Isolierung des Triethyl-i-propylammonium-Bis(pentafluorethyl)phosphinats wird diese Mischung in 15 cm³ Wasser gelöst und mit wässeriger KOH (0.477 g KOH in 5 cm³ Wasser) bei Raumtemperatur behandelt. Das Wasser wird am Rotationsverdampfer entfernt und der Rückstand wird im Hochvakuum (1.4 Pa) bei 50° C drei Stunden getrocknet. 8.70 g eines festen Materials, die erhalten werden, werden in 15 cm³ Dichlormethan suspendiert, das Sediment wird abfiltriert und zweimal mit 5 cm³ Dichlormethan auf dem Filter gewaschen. Nach der Entfernung des Dichlormethans werden 5.9 g eines festen Salzes erhalten. Die Ausbeute an Triethyl-i-propylammonium-Bis(pentafluorethyl)phosphinat ist 57.7 % bezogen auf Tris(pentafluorethyl)phosphinoxid.
   ¹⁹F NMR (Referenz: CCl₃F - interner Standard; Lösungsmittel: CD₃CN) _{:} 80.18 m (2CF₃), -124.89 dm (2CF₂); ²J_{PF} = 66 Hz.
   ¹H NMR (Referenz: TMS ; Lösungsmittel: CD₃CN) : 1.29 tm (3CH₃); 1.38 dm (2CH₃); 3.31 q (3CH₂); 3.71 hep. (CH); ³J_{H,H} = 7.3 Hz ; ³J_{H,H} = 6.7 Hz.
   ³¹P NMR (Referenz: 85 % H₃PO₄; Lösungsmittel: CD₃CN) : -2.32 quin. (1P); ²J_{PF} = 66 Hz.
Beispiel 5: Ethyltributylphosphonium-Bis(pentafluorethyl)phosphinat 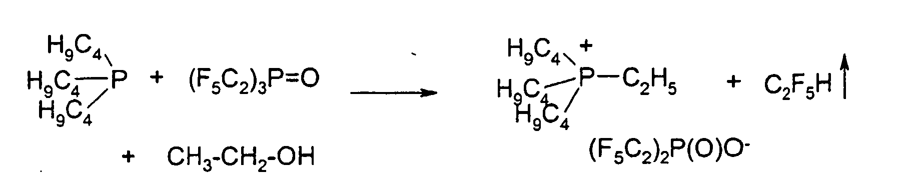 12.00 g (29.7 mmol) Tris(pentafluorethyl)phosphinoxid, (C₂F₅)₃P=O, werden in einem 50 ml Kolben, der mit einem bei minus 65 bis minus 70° C gehaltenen Rückflusskühler ausgestattet ist, mit 20 cm³ Dichlormethan und 6.00 g (29.7 mmol) Tributylphosphin vermischt. Bei Raumtemperatur werden 1.37 g (29.7 mmol) Ethanol unter Rühren der Reaktionsmischung mit einem Magnetrührer innerhalb von 3 Minuten zugegeben. Der Rückflusskühler wird auf Raumtemperatur erwärmt und das Dichlormethan wird abdestilliert. Der Rückstand wird im Vakuum von 1.4 Pa bei 60° C getrocknet. 15.60 g eines festen Materials werden erhalten (Schmelzpunkt 42-43° C). Die Ausbeute an Ethyltributylphosphonium-Bis(pentafluorethyl)phosphinat ist 98.7 %.
   ¹⁹F NMR (Referenz: CCl₃F - interner Standard; Lösungsmittel: CD₃CN) _{:} 80.21 m (2CF₃); -124.89 dm (2CF₂); ²J_{P,F} = 65 Hz.
   ¹H NMR (Referenz: TMS ; Lösungsmittel: CD₃CN) : 0.94 t (3CH₃); 1.17 dt (CH₃); 1.46 m (6CH₂); 2.11 m (3CH₂); 2.15 dq (CH₂); ³J_{H,H} = 7.1 Hz; ³J_{H,H} = 7.6 Hz ; ³J_{P,H} = 13.0 Hz ; ⁴J_{P,H} = 18.2 Hz.
   ³¹P NMR (Referenz: 85 % H₃PO₄; Lösungsmittel: CD₃CN) : 34.73 br. s (1P); -2.39 quin. (1 P) ; ²J_{P,F} = 65 Hz.
Beispiel 6 : Tetraethylammonium-Bis(pentafluorethyl)phosphinat 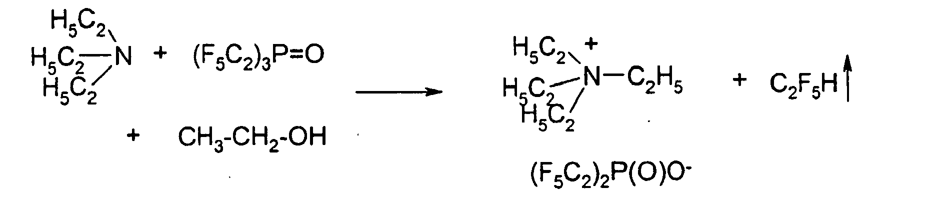 12.62 g (31.2 mmol) Tris(pentafluorethyl)phosphinoxid, (C₂F₅)₃P=O, werden in einem 50 ml Kolben, der mit einem bei minus 65 bis minus 70° C gehaltenen Rückflusskühler ausgestattet ist, mit 20 cm³ Dichlormethan und 3.16 g (31.2 mmol) Triethylamin vermischt. Bei Raumtemperatur werden 1.44 g (31.2 mmol) Ethanol unter Rühren der Reaktionsmischung mit einem Magnetrührer innerhalb von 3 Minuten zugegeben. Der Rückflusskühler wird auf Raumtemperatur erwärmt und das Dichlormethan wird abdestilliert. Der Rückstand wird im Vakuum von 1.4 Pa bei 60° C getrocknet. 13.07 g eines festen Materials werden erhalten (Schmelzpunkt 103-105° C). Die Ausbeute an Tetraethylammonium-Bis(pentafluorethyl)phosphinat ist 97.1 %.
   ¹⁹F NMR (Referenz: CCl₃F - interner Standard; Lösungsmittel: CD₃CN) : -80.23 m (2CF₃); -124.94 dm (2CF₂); ²J_{P,F} = 65 Hz.
   ¹H NMR (Referenz: TMS ; Lösungsmittel: CD₃CN) : 1.20 tm (CH₃); 3.18 q (CH₂); ³J_{H,H} = 7.3 Hz.
   ³¹P NMR (Referenz: 85 % H₃PO₄; Lösungsmittel: CD₃CN) : -2.33 quin. ; ²J_{P,F} = 65 Hz.
Beispiel 7: N-Ethylbenzothiazolium-Bis(pentafluorethyl)phosphinat 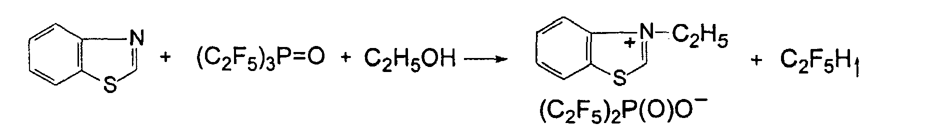 10.74 g (26.6 mmol) Tris(pentafluorethyl)phosphinoxid, (C₂F₅)₃P=O, werden in einem 50 ml Kolben, der mit einem bei minus 65 bis minus 70° C gehaltenen Rückflusskühler ausgestattet ist, mit 20 cm³ Dichlormethan und 3.53 g (26.1 mmol) Benzothiazol vermischt. Bei Raumtemperatur werden 1.22 g (26.5 mmol) Ethanol unter Rühren der Reaktionsmischung mit einem Magnetrührer innerhalb von 5 Minuten zugegeben. Der Rückflusskühler wird auf Raumtemperatur erwärmt und das Dichlormethan wird abdestilliert. Der Rückstand wird im Vakuum von 1.4 Pa bei 60° C getrocknet. 13.07 g eines festen Materials werden erhalten (Schmelzpunkt 76-77° C). Die Ausbeute an N-Ethylbenzothiazolium-Bis(pentafluorethyl)phosphinat ist 82.0 % bezogen auf Benzothiazol.
   ¹⁹F NMR (Referenz: CCl₃F - interner Standard; Lösungsmittel: CD₃CN) : - 80.08 m (2CF₃); -124.81 dm (2CF₂); ²J_{P,F}= 67 Hz.
   ¹H NMR (Referenz: TMS ; Lösungsmittel: CD₃CN) : 1.66 t (CH₃); 4.81 q (CH₂); 7.88 m (2CH) ; 8.30 m (2CH) ; 10.34 s. (CH) ; ³J_{H.H} = 7.3 Hz.
   ³¹P NMR (Referenz: 85 % H₃PO₄; Lösungsmittel: CD₃CN) : -2.00 quin. ; ²JP,F = 67 Hz.
Beispiel 8: N,N-Dimethylimidazolium-Bis(pentafluorethyl)phosphinat 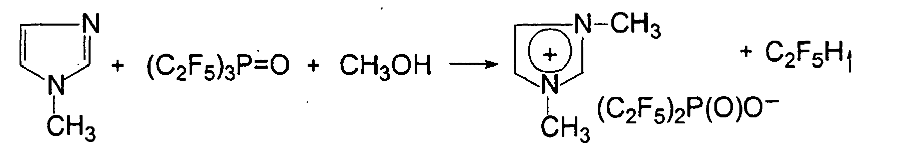 20.49 g (50.7 mmol) Tris(pentafluorethyl)phosphinoxid, (C₂F₅)₃P=O, werden in einem 100 ml Kolben, der mit einem bei minus 65 bis minus 70° C gehaltenen Rückflusskühler ausgestattet ist, mit 30 cm³ Dichlormethan und 4.16 g (50.7 mmol) N-Methylimidazol vermischt. Bei Raumtemperatur werden 1.623 g (50.7 mmol) Methanol unter Rühren der Reaktionsmischung mit einem Magnetrührer innerhalb von 15 Minuten zugegeben. Der Rückflusskühler wird auf Raumtemperatur erwärmt und das Dichlormethan wird abdestilliert. Der Rückstand wird im Vakuum von 1.4 Pa bei 60° C getrocknet. 19.23 g eines festen Materials werden erhalten. Die Ausbeute an N,N-Dimethylimidazolium-Bis(pentafluorethyl)phosphinat ist 95.2 % (Schmelzpunkt 35-37° C).
   ¹⁹F NMR (Referenz: CCl₃F - interner Standard; Lösungsmittel: CD₃CN) : 80.18 m (2CF₃); -124.90 dm (2CF₂); ²J_{P,F} = 66 Hz.
   ¹H NMR (Referenz: TMS ; Lösungsmittel: CD₃CN) : 3.84 d (2CH₃); 7.37 d (2CH) ; 8.61 br. s. (CH) ; ⁴J_{H,H} = 1.6 Hz ; ⁴J_{H,H} = 0.6 Hz.
   ³¹P NMR (Referenz: 85 % H₃PO₄; Lösungsmittel: CD₃CN) : -2.16 quin. ; ²J_{P,F} = 66 Hz.
Beispiel 9: N-Methyl-N-ethylimidazolium-Bis(pentafluorethyl)phosphinat 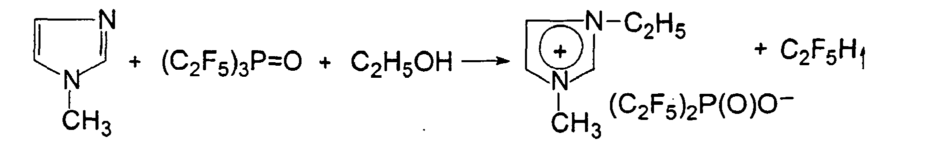 23.22 g (57.5 mmol) Tris(pentafluorethyl)phosphinoxid, (C₂F₅)₃P=O, werden in einem 100 ml Kolben, der mit einem bei minus 65 bis minus 70° C gehaltenen Rückflusskühler ausgestattet ist, mit 30 cm³ Dichlormethan und 4.72 g (57.5 mmol) N-Methylimidazol vermischt. Bei Raumtemperatur werden 2.643 g (57.4 mmol) Ethanol unter Rühren der Reaktionsmischung mit einem Magnetrührer innerhalb von 15 Minuten zugegeben. Der Rückflusskühler wird auf Raumtemperatur erwärmt und das Dichlormethan wird abdestilliert. Der Rückstand wird im Vakuum von 1.4 Pa bei 60° C getrocknet. 21.97 g eines flüssigen Materials werden erhalten. Die Ausbeute an N-Methyl-N-ethylimidazolium-Bis(pentafluorethyl)phosphinat ist 92.9 %.
   ¹⁹F NMR (Referenz: CCl₃F - interner Standard; Lösungsmittel: CD₃CN) _{:} 80.17 m (2CF₃); -124.90 dm (2CF₂); ²J_{P,F} = 66 Hz.
   ¹H NMR (Referenz: TMS ; Lösungsmittel: CD₃CN) : 1.47 t (CH₃); 3.87 s (CH₃); 4.21 q (CH₂); 7.48 dd (CH) ; 7.56 dd (CH) ; 9.01 br. s. (CH) ; ³J_{H,H} = 7.3 Hz ; J_{H,H} = 1.8 Hz.
   ³¹P NMR (Referenz: 85 % H₃PO₄; Lösungsmittel: CD₃CN) : -2.07 quin. ; ²J_{P,F} = 67 Hz.
Beispiel 10: 2-Methyl-1,1,3,3-tetramethylisouronium-Bis(pentafluorethyl)phosphinat 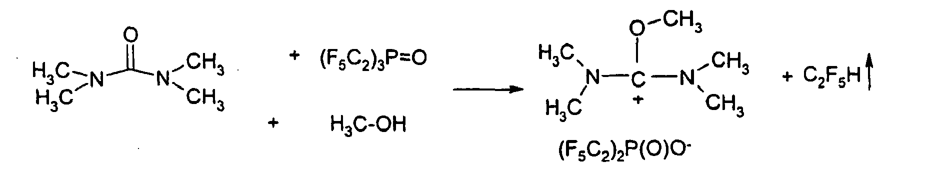 6.72 g (16.6 mmol) Tris(pentafluorethyl)phosphinoxid, (C₂F₅)₃P=O, werden in einem 25 ml Kolben, der mit einem Rückflusskühler ausgestattet ist, mit 15 cm³ Dimethoxyethan und 1.93 g (16.6 mmol) Tetramethylharnstoff vermischt. Zu dieser Mischung werden 0.532 g (16.6 mmol) Methanol unter Rühren der Reaktionsmischung mit einem Magnetrührer zugegeben. Die Reaktionsmischung wird 5 Stunden gekocht und alle flüchtigen Produkte werden im Hochvakuum (1.4 Pa) bei 50° C entfernt. 6.59 g einer viskosen Flüssigkeit werden erhalten. Die Ausbeute an 2-Methyl-1,1,3,3-tetramethylisouronium-Bis(pentafluorethyl)phosphinat ist 91.9 %.
   ¹⁹F NMR (Referenz: CCl₃F - interner Standard; Lösungsmittel: CD₃CN) _{:} 80.21 m (2CF₃); -124.91 dm (2CF₂); ²J_{P,F} = 67 Hz.
   ¹H NMR (Referenz: TMS ; Lösungsmittel: CD₃CN) : 3.05 s (4CH₃); 4.05 s (OCH₃).
   ³¹P NMR (Referenz: 85 % H₃PO₄; Lösungsmittel: CD₃CN) : -2.12 quin. ; ²J_{P,F} = 67 Hz.
Beispiel 11: Methyldiphenylselenonium-Bis(pentafluorethyl)phosphinat 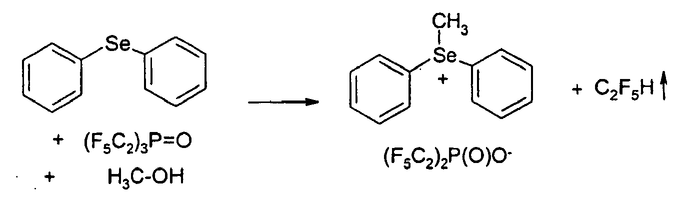 6.08 g (15.05 mmol) Tris(pentafluorethyl)phosphinoxid, (C₂F₅)₃P=O, werden in einem 25 ml Kolben, der mit einem Rückflusskühler ausgestattet ist, mit 15 cm³ Dimethoxyethan und 3.51 g (15.05 mmol) Diphenylselenid vermischt. Zu dieser Mischung werden 0.482 g (15.05 mmol) Methanol unter Rühren der Reaktionsmischung mit einem Magnetrührer zugegeben. Die Reaktionsmischung wird 8 Stunden gekocht und alle flüchtigen Produkte werden im Hochvakuum (1.4 Pa) bei 50° C entfernt. Der Rückstand wird mit Pentan gewaschen (drei Mal mit 5 cm³) und im Vakuum von 1.4 Pa bei 50° C eine Stunde getrocknet. 4.06 g einer gelbgrünen viskosen Flüssigkeit werden erhalten. Die Ausbeute an Methyldiphenylselenonium-Bis(pentafluorethyl)phosphinat ist 49.2 %.
   ¹⁹F NMR (Referenz: CCl₃F - interner Standard; CD₃CN-Film) : -80.16 m (2CF₃); -124.84 dm (2CF₂); ²J_{P,F} = 77 Hz.
   ¹H NMR (Referenz: TMS ; Lösungsmittel: CD₃CN-Film) : 3.39 s (CH₃); 7.60-7.80 m (2C₆H₅).
   ³¹P NMR (Referenz: 85 % H₃PO₄; Lösungsmittel: CD₃CN-Film) : -1.15 quin.; ²J_{P,F} = 77 Hz.
Beispiel 12: 1-(4,5,5-Trifluor-4-pentenyl)-3-methyl-imidazolium-Bis(pentafluorethyl)phosphinat 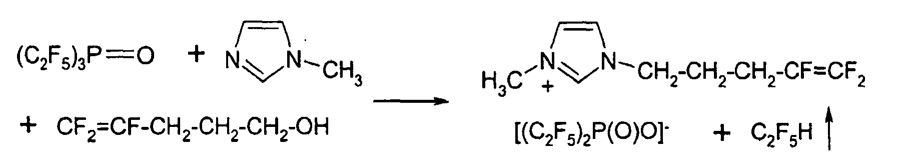 8,61 g (21.3 mmol) Tris(pentafluorethyl)phosphinoxid, (C₂F₅)₃P=O, werden in einem Kolben, der mit einem bei minus 25° C gehaltenen Rückflusskühler ausgestattet ist, mit 20 cm³ trockenem Benzol und 1.75 g (21.3 mmol) N-Methylimidazol vermischt. Zu dieser Mischung werden bei Raumtemperatur 2.98 g (21.3 mmol) 4,5,5-Trifluorpent-4-en-1-ol unter Rühren mit einem Magnetrührer zugegeben. Die Reaktionsmischung wird 20 Minuten bei einer Ölbadtemperatur von 100°C erhitzt. Nach Abkühlen auf Raumtemperatur wird das Phosphinat von der Benzolphase getrennt und zwei Mal mit 10 cm³ Benzol gewaschen. Nach Trocknen im Vakuum von 13.3 Pa bei 60° C (2 Stunden), erhält man 10.53 g 1-(4,5,5-Trifluor-4-pentenyl)-3-methyl-imidazolium-Bis(pentafluorethyl)phosphinat als Flüssigkeit. Die Ausbeute ist 97.6 %.
   ¹⁹F NMR (Referenz: CCl₃F - interner Standard; CD₃CN-Film) : -80.22 m (2CF₃); -124.90 dm (2CF₂); ²J_{P,F} = 66 Hz; -105.27 dd (CF); ²J_{F,F} = 89 Hz;
   ³J_{F,F} = 33 Hz; -123.72 dd (CF); ²J_{F,F} = 89 Hz; ³J_{F,F} = 113 Hz; -174.2 ddt (CF); ²J_{F,F} = 89 Hz; ³J_{F,F} = 113 Hz; ³J_{F,H} = 21 Hz.
   ¹H NMR (Referenz: TMS ; Lösungsmittel: CD₃CN-Film) : 2.08 quin (CH₂); ³J_{H,H} = 7.4 Hz; 2.36 dddt (CH₂); ³J_{H,H} = 7.4 Hz, ³J_{F,H} = 21 Hz; ⁴J_{H,F} = 4 Hz; ⁴J_{H,F} 3 Hz; 3.82 s (CH₃); 4.19 t (CH₂); ³J_{H,H} = 7 Hz; 7.37 dd (CH); ³J_{H,H} = 7.3 Hz; J_{H,H} = 1.5 Hz; 7.42 dd (CH); ³J_{H,H} = 7.3 Hz; J_{H,H} = 1.5 Hz; 8.66 br.s. (CH).
   ³¹P NMR (Referenz: 85 % H₃PO₄; Lösungsmittel: CD₃CN-Film) : -1.61 quinsep; ²J_{P,F} = 66 Hz; ³J_{P,F} = 1 Hz.
Beispiel 13: 1-(3,3,4,4,5,5,5-Heptafluorpentyl)-3-methyl-imidazolium-Bis(pentafluorethyl)phosphinat 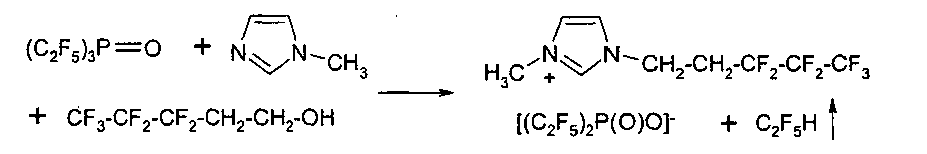 8,27 g (20.5 mmol) Tris(pentafluorethyl)phosphinoxid, (C₂F₅)₃P=O, werden in einem Kolben, der mit einem bei minus 25° C gehaltenen Rückflusskühler ausgestattet ist, mit 20 cm³ trockenem Benzol und 1.67 g (20.3 mmol) N-Methylimidazol vermischt. Zu dieser Mischung werden bei Raumtemperatur 4.37 g (20.4 mmol) 3,3,4,4,5,5,5-Heptafluorpentan-1-ol unter Rühren mit einem Magnetrührer zugegeben. Die Reaktionsmischung wird 20 Minuten bei einer Ölbadtemperatur von 100°C erhitzt. Nach Abkühlen auf Raumtemperatur wird das Phosphinat von der Benzolphase getrennt und zwei Mal mit 10 cm³ Benzol gewaschen. Nach Trocknen im Vakuum von 13.3 Pa bei 60° C (2 Stunden), erhält man 11.55 g 1-(3,3,4,4,5,5,5-Heptafluorpentyl)-3-methyl-imidazolium-Bis(pentafluorethyl)phosphinat als Flüssigkeit. Die Ausbeute ist 97.5 %.
   ¹⁹F NMR (Referenz: CCl₃F - interner Standard; CD₃CN-Film) : -80.26 m (2CF₃); -80.16 t (CF₃), ⁴J_{F,F} = 9 Hz; -124.92 dm (2CF₂); ²J_{P,F} = 66 Hz; -114.23 qt (CF₂); ³J_{F,H} = 18.5 Hz; ⁴J_{F,F} = 9 Hz; -127.33 s (CF₂).
   ¹H NMR (Referenz: TMS ; Lösungsmittel: CD₃CN-Film) : 2.82 ttt (CH₂); ³J_{H,F} = 18.5 Hz; ³J_{H,H} = 7.1 Hz; ⁴J_{H,F} = 1.3 Hz; 3.83 s (CH₃); 4.51 t (CH₂); ³J_{H,H} = 7.1 Hz; 7.38 dd (CH); ³J_{H,H} = 7.1 Hz; ³JH,H = 1.5 Hz; 7.51 dd (CH); ³J_{H,H} = 7.1 Hz; ³J_{H,H} = 1.5 Hz; 8.79 br.s. (CH).
   ³¹P NMR (Referenz: 85 % H₃PO₄; Lösungsmittel: CD₃CN-Film) : -1.59 quinsep; ²J_{P,F} = 66 Hz; ³J_{P.F} = 1 Hz.
Beispiel 14: 1-Allyl-3-methyl-imidazolium bis(pentafluorethyl)phosphinat 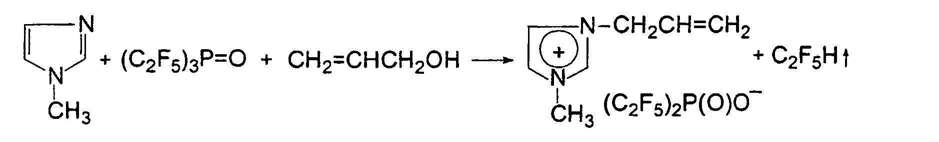 17,81 g (44.1 mmol) Tris(pentafluorethyl)phosphinoxid, (C₂F₅)₃P=O, werden in einem Kolben, der mit einem bei minus 65°-70° C gehaltenen Rückflusskühler ausgestattet ist, mit 20 cm³ trockenem Benzol und 3.62 g (44.1 mmol) N-Methylimidazol vermischt. Zu dieser Mischung werden bei Raumtemperatur 2.56 g (44.1 mmol) Allylalkohol unter Rühren mit einem Magnetrührer innerhalb von 15 Minuten zugegeben. Der Rückflusskühler wird auf Raumtemperatur erwärmt und das Benzol wird abdestilliert. Der Rückstand wird im Vakuum von 13 Pa bei 80° C getrocknet. 16.97 g eines viskosen flüssigen Materials werden erhalten. Die Ausbeute an 1-Allyl-3-methylimidazolium-Bis(pentafluorethyl)-phosphinat ist 90.7 %.
   ¹⁹F NMR (Referenz: CCl₃F - interner Standard; CD₃CN) : -80.14 m (2CF₃); -124.90 dm (2CF₂); ²J_{P,F} = 66 Hz.
   ¹H NMR (Referenz: TMS ; Lösungsmittel: CD₃CN): 3.83 s (CH₃); 4.75 d,m (CH₂); ³J_{H,H} = 6.1 Hz; 5.35 d,m (CH); ³J_{H,H} = 16.8 Hz; 5.38 d,d (CH); ³J_{H,H} = 10.3 Hz; J_{H,H} = 1.0 Hz; 6.00 d,d,t (CH); ³J_{H},_{H} = 16.8 Hz;³J_{H},_{H} = 10.3 Hz; ³J_{H,H} = 6.3 Hz; 7.39 m (CH); 7.40 m (CH); 8.73 br.s (CH).
   ³¹P NMR (Referenz: 85 % H₃PO₄; Lösungsmittel: CD₃CN) : -2.48 quin; ²J_{P,F} = 66 Hz.

## Patentansprüche

1. Verfahren zur Herstellung von organischen Salzen mit Bis(perfluoralkyl)phosphinat-Anionen umfassend zumindest die Umsetzung von einem Tris(perfluoralkyl)phosphinoxid mit einem Alkohol und einer organischen Base, die stärker basisch ist als der Alkohol.

2. Verfahren zur Herstellung von organischen Salzen mit Bis(perfluoralkyl)phosphinat-Anionen nach Anspruch 1,
**dadurch gekennzeichnet, dass** als organische Base eine Verbindung der allgemeinen Formel (1),
R₃X (1)
oder der allgemeinen Formel (2),
R₂Y (2)
eingesetzt wird, worin
X 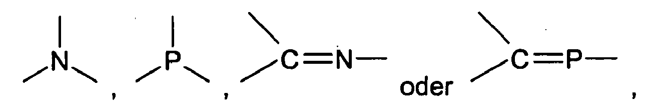
Y -O-, -S-, -Se-, -C(=O)-, -C(=S)- oder -C(=Se)-,
R -H für Y ≠ O und wobei im Fall der Formel (2) nicht alle R
gleichzeitig H sein dürfen,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehrere Dreifachbindungen oder
gesättigtes, teilweise oder vollständig ungesättigtes Cycloalkyl mit 3-7 C-Atomen, insbesondere Phenyl,
das mit Alkylgruppen mit 1-6 C-Atomen substituiert sein kann,
wobei die Substituenten R jeweils gleich oder verschieden sind,
wobei die Substituenten R paarweise durch Einfach- oder Doppelbindung miteinander verbunden sein können,
wobei ein oder mehrere, jedoch nicht alle Substituenten R teilweise oder vollständig mit Halogenen, insbesondere -F und/oder -Cl, oder teilweise mit -CN oder -NO₂, substituiert sein können
und wobei ein oder zwei nicht benachbarte Kohlenstoffatome des Substituenten R durch Atome und/oder Atomgruppierungen ausgewählt aus der Gruppe -O-, -C(O)-, -C(O)O-, -C(O)NH-, -C(O)NR'-, -S-, -S(O)-, - S(O)NH-, -S(O)NR'-, -S(O)O-, -S(O)₂-, -S(O)₂O-, -S(O)₂NH-, -S(O)₂NR'-, -N=, -N=N-, -NH-, -NR'-, -PH-, -PR'-, -P(O)R'-, -P(O)R'-O-, -O-P(O)R'-O-und -PR'₂=N- mit R' = nicht, teilweise oder perfluoriertes C₁- bis C₆-Alkyl, C₃- bis C7-Cycloalkyl, unsubstituiertes oder substituiertes Phenyl oder unsubstituierter oder substituierter Heterocyclus, ersetzt sein können, bedeuten.

3. Verfahren nach Anspruch 1 oder 2,
**dadurch gekennzeichnet, dass** als organische Base eine Verbindung ausgewählt aus der Gruppe (C₂H₅)₃N, (C₂H₅)₂NH, (C₂H₅)₃P, (C₂H₅O)₃P, (C₄H₉)₃P, CH₃-S-CH₃, (CH₃)₂N-C(O)-N(CH₃)₂, C₆H₅-Se-C₆H₅, Guanidin, Pyridin, Imidazol, N-Methyl-Imidazol, Benzoxazol, Benzothiazol, Pyrollidin, Piperidin, Piperazin, Anilin, N,N-Dimethylanilin, Benzylamin, N-Ethylbenzylamin oder Diphenylsulfid eingesetzt wird.

4. Verfahren zur Herstellung von organischen Salzen mit Bis(perfluoralkyl)phosphinat-Anionen nach einem oder mehreren der Ansprüche 1 bis 3,
**dadurch gekennzeichnet, dass** als Alkohol ein aliphatischer Alkohol eingesetzt wird.

5. Verfahren nach einem oder mehreren der Ansprüche 1 bis 4,
**dadurch gekennzeichnet, dass** als Alkohol eine Verbindung ausgewählt aus der Gruppe Methanol, Ethanol, Isopropanol, n-Propanol, Allylalkohol, Butanol, Hexanol oder Benzylalkohol eingesetzt wird.

6. Verfahren nach einem oder mehreren der Ansprüche 1 bis 4,
**dadurch gekennzeichnet, dass** als Alkohol ein fluorierter aliphatischer Alkohol eingesetzt wird.

7. Verfahren nach einem oder mehreren der Ansprüche 1 bis 4,
**dadurch gekennzeichnet, dass** als Alkohol ein ungesättigter Alkohol eingesetzt wird.

8. Verfahren zur Herstellung von organischen Salzen mit Bis(perfluoralkyl)phosphinat-Anionen nach einem oder mehreren der Ansprüche 1 bis 7,
**dadurch gekennzeichnet, dass** als Tris(perfluoralkyl)phosphinoxid ein Tris(perfluoralkyl)phosphinoxid eingesetzt wird, bei dem die drei Perfluoralkylgruppen gleich oder verschieden sind.

9. Verfahren zur Herstellung von organischen Salzen mit Bis(perfluoralkyl)phosphinat-Anionen nach einem oder mehreren der Ansprüche 1 bis 8,
**dadurch gekennzeichnet, dass** als
Tris(perfluoralkyl)phosphinoxid ein Tris(perfluoralkyl)phosphinoxid eingesetzt wird, bei dem die Perfluoralkylgruppen 1 bis 12 C-Atome enthalten und geradkettig oder verzweigt sind.

10. Verfahren nach Anspruch 8 oder 9,
**dadurch gekennzeichnet, dass** als
Tris(perfluoralkyl)phosphinoxid eine Verbindung ausgewählt aus der Gruppe (CF₃)₃P(O), (C₂F₅)₃P(O), (C₃F₇)₃P(O) oder (C₄F₉)sP(O) eingesetzt wird.

11. Verfahren zur Herstellung von organischen Salzen mit
Bis(perfluoralkyl)phosphinat-Anionen nach einem oder mehreren der Ansprüche 1 bis 10, **dadurch gekennzeichnet, dass** die Umsetzung bei einer Temperatur von -20° C bis 200°C durchgeführt wird.

## Claims

1. Process for the preparation of organic salts containing bis(perfluoroalkyl)-phosphinate anions comprising at least the reaction of a tris(perfluoroalkyl)-phosphine oxide with an alcohol and an organic base which is more strongly basic than the alcohol.

2. Process for the preparation of organic salts containing bis(perfluoroalkyl)-phosphinate anions according to Claim 1,
**characterised in that** the organic base employed is a compound of the general formula (1)
R₃X (1)
or of the general formula (2)
R₂Y (2)
in which
X denotes 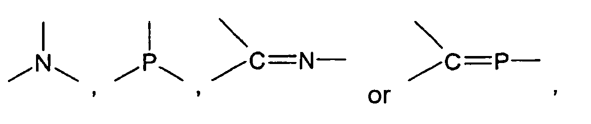
Y denotes -O-, -S-, -Se-, -C(=O)-, -C(=S)- or -C(=Se)-,
R denotes -H for Y ≠ O and where, in the case of the formula (2), all R cannot simultaneously be H,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds or
saturated, partially or fully unsaturated cycloalkyl having 3-7 C atoms, in particular phenyl,
which may be substituted by alkyl groups having 1-6 C atoms,
where the substituents R are in each case identical or different,
where the substituents R may be bonded to one another in pairs by a single or double bond,
where one or more, but not all, substituents R may be partially or fully substituted by halogens, in particular -F and/or -Cl, or partially by -CN or -NO₂,
and where one or two non-adjacent carbon atoms of the substituent R may be replaced by atoms and/or atom groups selected from the group -0-, -C(O)-, -C(O)O-, -C(O)NH-, -C(O)NR'-, -S-, -S(O)-, -S(O)NH-, -S(O)NR'-, -S(O)O-, -S(O)₂-, -S(O)₂O-, -S(O)₂NH-, -S(O)₂NR'-, -N=, -N=N-, -NH-, -NR'-, -PH-, -PR'-, -P(O)R'-, -P(O)R'-O-, -O-P(O)R'-O- and -PR'₂=N-, where R' = non-, partially or perfluorinated C₁- to C₆-alkyl, C₃- to C₇-cycloalkyl, unsubstituted or substituted phenyl or an unsubstituted or substituted heterocycle.

3. Process according to Claim 1 or 2,
**characterised in that** the organic base employed is a compound selected from the group (C₂H₅)₃N, (C₂H₅)₂NH, (C₂H₅)₃P, (C₂H₅O)₃P, (C₄H₉)₃P, CH₃-S-CH₃, (CH₃)₂N-C(O)-N(CH₃)₂, C₆H₅-Se-C₆H₅, guanidine, pyridine, imidazole, N-methylimidazole, benzoxazole, benzothiazole, pyrrolidine, piperidine, piperazine, aniline, N,N-dimethylaniline, benzylamine, N-ethylbenzylamine or diphenyl sulfide.

4. Process for the preparation of organic salts containing bis(perfluoroalkyl)-phosphinate anions according to one or more of Claims 1 to 3, **characterised in that** the alcohol employed is an aliphatic alcohol.

5. Process according to one or more of Claims 1 to 4,
**characterised in that** the alcohol employed is a compound selected from the group methanol, ethanol, isopropanol, n-propanol, allyl alcohol, butanol, hexanol or benzyl alcohol.

6. Process according to one or more of Claims 1 to 4,
**characterised in that** the alcohol employed is a fluorinated aliphatic alcohol.

7. Process according to one or more of Claims 1 to 4,
**characterised in that** the alcohol employed is an unsaturated alcohol.

8. Process for the preparation of organic salts containing bis(perfluoroalkyl)-phosphinate anions according to one or more of Claims 1 to 7,
**characterised in that** the tris(perfluoroalkyl)phosphine oxide employed is a tris(perfluoroalkyl)phosphine oxide in which the three perfluoroalkyl groups are identical or different.

9. Process for the preparation of organic salts containing bis(perfluoroalkyl)-phosphinate anions according to one or more of Claims 1 to 8,
**characterised in that** the tris(perfluoroalkyl)phosphine oxide employed is a tris(perfluoroalkyl)phosphine oxide in which the perfluoroalkyl groups contain 1 to 12 C atoms and are straight-chain or branched.

10. Process according to Claim 8 or 9,
**characterised in that** the tris(perfluoroalkyl)phosphine oxide employed is a compound selected from the group (CF₃)₃P(O), (C₂F₅)₃P(O), (C₃F₇)₃P(O) or (C₄F₉)₃P(O).

11. Process for the preparation of organic salts containing bis(perfluoroalkyl)-phosphinate anions according to one or more of Claims 1 to 10,
**characterised in that** the reaction is carried out at a temperature of -20°C to 200°C.

## Revendications

1. Procédé de préparation de sels organiques contenant des anions bis-(perfluoroalkyl)phosphinate, comprenant au moins la réaction d'un oxyde de tris(perfluoroalkyl)phosphine avec un alcool et une base organique plus fortement basique que l'alcool.

2. Procédé de préparation de sels organiques contenant des anions bis-(perfluoroalkyl)phosphinate selon la revendication 1, **caractérisé en ce que** la base organique employée est un composé de formule générale (1)
R₃X (1)
ou de formule générale (2)
R₂Y (2)
dans lesquelles
X désigne 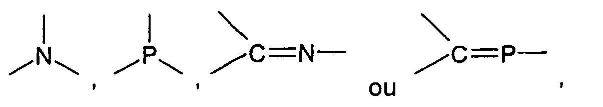
Y désigne -O-, -S-, -Se-, -C(=O)-, -C(=S)- ou -C(=Se)-,
R désigne -H pour Y ≠ O et où, dans le cas de la formule (2), tous les
R ne peuvent pas simultanément être H,
alkyle à chaîne linéaire ou ramifiée ayant 1-20 atomes de C,
alcényle à chaîne linéaire ou ramifiée ayant 2-20 atomes de C et une ou plusieurs double liaisons,
alcynyle à chaîne linéaire ou ramifiée ayant 2-20 atomes de C et une ou plusieurs triple liaisons, ou
cycloalkyle saturé ou partiellement ou totalement insaturé ayant 3-7 atomes de C, en particulier phényle,
pouvant être substitué par des groupements alkyle ayant 1-6 atomes de C,
où les substituants R sont dans chaque cas identiques ou différents,
où les substituants R peuvent être liés les uns aux autres par paires par une simple ou double liaison,
où un ou plusieurs, mais pas tous, les substituants R peuvent être partiellement ou totalement substitués par des halogènes, en particulier -F et/ou -Cl, ou partiellement par -CN ou -NO₂,
et où un ou deux atomes de carbone non adjacents du substituant R peuvent être remplacés par des atomes et/ou des groupes d'atomes sélectionnés parmi le groupe -O-, -C(O)-, -C(O)O-, -C(O)NH-, -C(O)NR'-, -S-, -S(O)-, -S(O)NH-, -S(O)NR'-, -S(O)O-, -S(O)₂-, -S(O)₂O-, -S(O)₂NH-, -S(O)₂NR'-, -N=, -N=N-, -NH-, -NR'-, -PH-, -PR'-, -P(O)R'-, -P(O)R'-O-, -O-P(O)R'-O- et -PR'₂=N-, où R' = C₁- à C₆-alkyle non- ou partiellement fluoré ou perfluoré, C₃- à C₇-cycloalkyle, phényle non substitué ou substitué ou un hétérocycle non substitué ou substitué.

3. Procédé selon la revendication 1 ou 2, **caractérisé en ce que** la base organique employée est un composé sélectionné parmi le groupe (C₂H₅)₃N, (C₂H₅)₂NH, (C₂H₅)₃P, (C₂H₅O)₃P, (C₄H₉)₃P, CH₃-S-CH₃, (CH₃)₂N-C(O)-N(CH₃)₂, C₆H₅-Se-C₆H₅, guanidine, pyridine, imidazole, N-méthyl-imidazole, benzoxazole, benzothiazole, pyrrolidine, pipéridine, pipérazine, aniline, N,N-diméthylaniline, benzylamine, N-éthylbenzylamine ou sulfure de diphényle.

4. Procédé de préparation de sels organiques contenant des anions bis-(perfluoroalkyl)phosphinate selon l'une ou plusieurs des revendications 1 à 3, **caractérisé en ce que** l'alcool employé est un alcool aliphatique.

5. Procédé selon l'une ou plusieurs des revendications 1 à 4, **caractérisé en ce que** l'alcool employé est un composé sélectionné parmi le groupe constitué par le méthanol, l'éthanol, l'isopropanol, le n-propanol, l'alcool allylique, butanol, l'hexanol ou l'alcool benzylique.

6. Procédé selon l'une ou plusieurs des revendications 1 à 4, **caractérisé en ce que** l'alcool employé est un alcool aliphatique fluoré.

7. Procédé selon l'une ou plusieurs des revendications 1 à 4, **caractérisé en ce que** l'alcool employé est un alcool insaturé.

8. Procédé de préparation de sels organiques contenant des anions bis-(perfluoroalkyl)phosphinate selon l'une ou plusieurs des revendications 1 à 7, **caractérisé en ce que** l'oxyde de tris(perfluoroalkyl)phosphine employé est un oxyde de tris(perfluoroalkyl)phosphine dans lequel les trois groupements perfluoroalkyle sont identiques ou différents.

9. Procédé de préparation de sels organiques contenant des anions bis-(perfluoroalkyl)phosphinate selon l'une ou plusieurs des revendications 1 à 8, **caractérisé en ce que** l'oxyde de tris(perfluoroalkyl)phosphine employé est un oxyde de tris(perfluoroalkyl)phosphine dans lequel les groupements perfluoroalkyle contiennent 1 à 12 atomes de C et sont à chaîne linéaire ou ramifiée.

10. Procédé selon la revendication 8 ou 9, **caractérisé en ce que** l'oxyde de tris(perfluoroalkyl)phosphine employé est un composé sélectionné parmi le groupe (CF₃)₃P(O), (C₂F₅)₃P(O), (C₃F₇)₃P(O) ou (C₄F₉)₃P(O).

11. Procédé de préparation de sels organiques contenant des anions bis-(perfluoroalkyl)phosphinate selon l'une ou plusieurs des revendications 1 à 10, **caractérisé en ce que** la réaction est réalisée à une température allant de -20°C à 200°C.
